# EUROPÄISCHE PATENTSCHRIFT

(11) **EP 3 387 090 B1**
(45) Veröffentlichungstag und Bekanntmachung des Hinweises auf die Patenterteilung: **03.06.2020**
(21) Anmeldenummer: 16805281.9
(22) Anmeldetag: 24.11.2016
(51) Int. Cl.: C09K 19/32, C09K 19/12

(54) **NAPHTHALIN-VERBINDUNGEN FÜR FLÜSSIGKRISTALLINE MISCHUNGEN**
NAPHTHALENE COMPOUNDS FOR LIQUID-CRYSTALLINE MIXTURES
COMPOSÉS NAPHTALÈNE POUR DES MÉLANGES DE CRISTAUX LIQUIDES

(30) Priorität: 09.12.2015 EP 15198620
(43) Veröffentlichungstag der Anmeldung: 17.10.2018
(73) Patentinhaber: Merck Patent GmbH, 64293 Darmstadt (DE)
(72) Erfinder: JASPER, Christian, 63500 Seligenstadt (DE); GUNST, Susann, 64283 Darmstadt (DE); HAENSEL, Helmut, 64367 Muehltal (DE); SCHULER, Brigitte, 63762 Grossostheim (DE)
(86) Internationale Anmeldenummer: PCT/EP2016/001981
(87) Internationale Veröffentlichungsnummer: WO 2017/097400

(56) Entgegenhaltungen:
- EP-A1- 0 952 135
- EP-A1- 1 762 605
- JP-A- 2000 109 843
- US-A- 5 942 648

## Beschreibung

Die Erfindung betrifft Verbindungen der Formel I wie unten definiert, ein Verfahren zu ihrer Herstellung, flüssigkristalline Medien enthaltend mindestens eine Verbindung der Formel I sowie ihre Verwendung als Komponente(n) in flüssigkristallinen Medien. Darüber hinaus betrifft die vorliegende Erfindung Flüssigkristall- und elektrooptische Anzeigeelemente, welche die erfindungsgemäßen, flüssigkristallinen Medien enthalten. Die erfindungsgemäßen Verbindungen weisen als Strukturelemente eine 2,6-substituierte Naphthalin-Gruppe neben einer charakteristisch substituierten Biphenylgruppe auf.

In den vergangenen Jahren wurden die Anwendungsgebiete für flüssigkristalline Verbindungen auf verschiedene Arten von Anzeigevorrichtungen, elektrooptische Geräte, elektronische Komponenten, Sensoren, etc. erheblich ausgeweitet. Aus diesem Grund wurden eine Reihe verschiedener Strukturen vorgeschlagen, insbesondere auf dem Gebiet der nematischen Flüssigkristalle. Die nematischen Flüssigkristallmischungen haben bisher die breiteste Anwendung in flachen Anzeigevorrichtungen gefunden. Sie wurden besonders in passiven TN- oder STN-Matrixanzeigen oder Systemen mit einer TFT-Aktivmatrix eingesetzt.

Die erfindungsgemäßen, flüssigkristallinen Verbindungen können als Komponente(n) flüssigkristalliner Medien verwendet werden, insbesondere für Displays, die auf dem Prinzip der verdrillten Zelle, dem Guest-Host-Effekt, dem Effekt der Deformation aufgerichteter Phasen DAP oder ECB (electrically controlled birefringence), dem IPS-Effekt (in-plane switching) oder dem Effekt der dynamischen Streuung beruhen.

Die Verwendung bestimmter Derivate mit einem Naphthalinring als flüssigkristalline Substanzen ist dem Fachmann bekannt. Es wurden bereits verschiedene Verbindungen mit einem Naphthalinring als flüssigkristallines Material und dessen Herstellung beschrieben, wie z. B. in der Druckschrift EP 0952135 A1, US 5,942,648, JP 2000-109843 A und US 2007/0051919 A1.

Der vorliegenden Erfindung lag die Aufgabe zugrunde, neue stabile Verbindungen aufzufinden, die als Komponente(n) flüssigkristalliner Medien geeignet sind. Insbesondere sollen die Verbindungen gleichzeitig eine vergleichsweise geringe Viskosität, sowie eine hohe optische Anisotropie besitzen. Für viele aktuelle Mischungskonzepte im Bereich der Flüssigkristalle ist es vorteilhaft, Verbindungen mit einer positiven dielektrischen Anisotropie Δε in Verbindung mit einer hohen optischen Anisotropie zu verwenden.

Im Hinblick auf die verschiedensten Einsatzbereiche derartiger Verbindungen mit hohem Δn war es wünschenswert, weitere Verbindungen, vorzugsweise mit hoher Nematogenität zur Verfügung zu haben, die auf die jeweiligen Anwendungen genau maßgeschneiderte Eigenschaften aufweisen.

Der Erfindung lag somit als eine Aufgabe zugrunde, neue stabile Verbindungen aufzufinden, die als Komponente(n) flüssigkristalliner Medien, insbesondere für z. B. TN-, STN-, IPS- und TN-TFT-Displays, geeignet sind.

Eine weitere Aufgabe der vorliegenden Erfindung war es, Verbindungen bereitzustellen, die für sich oder in Mischungen eine hohe optische Anisotropie Δn, einen hohen Klärpunkt sowie eine niedrige Rotationsviskosität γ₁ aufweisen. Darüber hinaus sollten die erfindungsgemäßen Verbindungen unter den in den Anwendungsgebieten vorherrschenden Bedingungen thermisch und photochemisch stabil sein. Ferner sollten die erfindungsgemäßen Verbindungen möglichst eine breite nematische Phase aufweisen. Als Mesogene sollten sie eine breite nematische Phase in Mischungen mit flüssigkristallinen Cokomponenten ermöglichen sowie hervorragend mit nematischen Basismischungen, insbesondere bei tiefen Temperaturen, mischbar sein. Ebenso bevorzugt sind Substanzen mit einem niedrigen Schmelzpunkt und einer geringen Schmelzenthalpie, da diese Größen wiederum Anzeichen für die oben genannten wünschenswerten Eigenschaften sind, wie z. B. eine hohe Löslichkeit, eine breite flüssigkristalline Phase und eine geringe Neigung zur spontanen Kristallisation in Mischungen bei tiefen Temperaturen. Gerade die Löslichkeit bei tiefer Temperatur unter Vermeidung von jeglicher Kristallisation ist wichtig für den sicheren Betrieb und Transport von Anzeigen in Fahr- und Flugzeugen und im Freien.

Überraschenderweise wurde gefunden, dass die erfindungsgemäßen Verbindungen vorzüglich als Komponenten flüssigkristalliner Medien geeignet sind. Mit ihrer Hilfe lassen sich flüssigkristalline Medien für Displays erhalten, die besonders hohe dielektrische Anisotropien benötigen, insbesondere für TN-TFT- und STN-Displays, aber auch für IPS-Systeme oder neuere Konzepte. Die erfindungsgemäßen Verbindungen sind hinreichend stabil und farblos. Auch zeichnen sie sich durch hohe optische Anisotropien Δn aus, aufgrund derer in der Anwendung in optischen Schaltelementen geringere Schichtdicken und damit niedrigere Schwellenspannungen erforderlich sind. Sie sind für Verbindungen mit vergleichbaren Eigenschaften sehr gut löslich. Darüber hinaus weisen die erfindungsgemäßen Verbindungen einen hohen Klärpunkt sowie gleichzeitig niedere Werte für die Rotationsviskosität auf. Im Vergleich mit Stoffen aus dem Stand der Technik werden deutlich niedrigere Schmelzpunkte und Schmelzenthalpien beobachtet.

Mit der Bereitstellung der erfindungsgemäßen Verbindungen wird ganz allgemein die Palette der flüssigkristallinen Substanzen, die sich unter verschiedenen, anwendungstechnischen Gesichtspunkten zur Herstellung flüssigkristalliner Mischungen eignen, erheblich verbreitert.

Die erfindungsgemäßen Verbindungen besitzen einen breiten Anwendungsbereich. In Abhängigkeit von der Auswahl der Substituenten können diese Verbindungen als Basismaterialien dienen, aus denen flüssigkristalline Medien zum überwiegenden Teil zusammengesetzt sind. Es können aber auch den erfindungsgemäßen Verbindungen flüssigkristalline Basismaterialien aus anderen Verbindungsklassen zugesetzt werden, um beispielsweise die dielektrische und/oder die optische Anisotropie eines solchen Dielektrikums zu beeinflussen und/oder um dessen Schwellenspannung und/oder dessen Viskosität zu optimieren.

Gegenstand der Erfindung sind somit Verbindungen der Formel I, 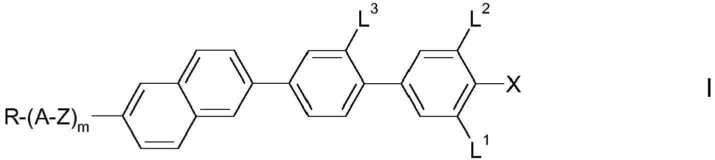 worin
- X: Cl,
- R: einen halogenierten oder unsubstituierten Alkylrest mit 1 bis 15 C-Atomen, wobei in diesen Resten auch eine oder mehrere CH2-Gruppen jeweils unabhängig voneinander durch -C≡C-, -CH=CH- , -(CO)O-, -O(CO)-, -(CO)- oder -O- so ersetzt sein können, dass O-Atome nicht direkt miteinander verknüpft sind, oder einen polymerisierbaren Rest,
- A: a) trans-1,4-Cyclohexylen oder Cyclohexenylen, worin auch eine oder mehrere nicht benachbarte CH₂-Gruppen durch -O- und/oder -S- ersetzt sein können und worin H durch F substituiert sein kann,
b) 1,4-Phenylen, worin eine oder zwei CH-Gruppen durch N ersetzt sein können und worin auch ein oder mehrere H-Atome gegen Br, Cl, F, CN, Methyl, Methoxy oder eine ein- oder mehrfach fluorierte Methyl- oder Methoxygruppe ersetzt sein können,
- Z: eine Einfachbindung, -CH₂O-, -(CO)O-, -CF₂O-, -CH₂CH₂CF₂O-, -CF₂CF₂-, -CH₂CF₂-, -CH₂CH₂-, -(CH₂)₄-, -CH=CH-, -CH=CF-, -CF=CF- oder -C≡C-, wobei asymmetrische Brücken nach beiden Seiten orientiert sein können,
L¹, L² und L³ unabhängig voneinander H oder F, und
m 0 oder 1, bevorzugt 0,
bedeuten.

Gegenstand der Erfindung ist weiterhin die Verwendung der Verbindungen der Formel I in flüssigkristallinen Medien.

Ebenfalls Gegenstand der vorliegenden Erfindung sind flüssigkristalline Medien mit mindestens zwei flüssigkristallinen Komponenten, welche mindestens eine Verbindung der Formel I enthalten.

Die Verbindungen der Formel I besitzen einen breiten Anwendungsbereich. In Abhängigkeit von der Auswahl der Substituenten können diese Verbindungen als Basismaterialien dienen, aus denen flüssigkristalline Medien zum überwiegenden Teil zusammengesetzt sind; es können aber auch Verbindungen der Formel I flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Die Verbindungen der Formel I sind in reinem Zustand farblos und bilden für sich oder in Mischungen flüssigkristalline Mesophasen in einem für die elektrooptische Verwendung günstig gelegenen Temperaturbereich. Mit den erfindungsgemäßen Verbindungen lassen sich breite nematischen Phasenbereiche erzielen. In flüssigkristallinen Mischungen erhöhen die erfindungsgemäßen Substanzen die optische Anisotropie deutlich und/oder führen zu einer Verbesserung der Tieftemperatur-Lagerstabilität gegenüber vergleichbaren Mischungen mit hoher dielektrischer Anisotropie. Gleichzeitig zeichnen sich die Verbindungen durch verbesserte UV-stabilität gegenüber bekannten Materialien aus dem Stand der Tecnik aus, die ein Brückenelement (z.B- -C=C- oder -CF=CF-) zwischen den Ringen aufweisen.

Z bedeutet, soweit vorhanden, bevorzugt eine Einfachbindung, -CF₂O-, -OCF₂-, -C₂F₄-, -CH₂O-, -OCH₂-, -C≡C- oder -(CO)O-, insbesondere eine Einfachbindung.

A bedeutet bevorzugt 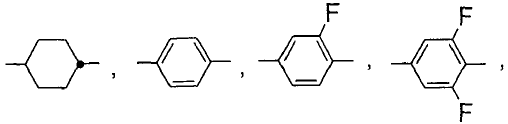 und ferner,

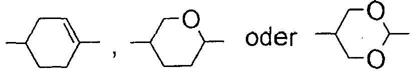

R bedeutet bevorzugt Alkyl, Alkoxy, Alkenyl oder Alkenyloxy mit bis zu 8 Kohlenstoffatomen oder einen polymerisierbaren Rest. R bedeutet besonders bevorzugt unverzweigtes Alkyl oder Alkenyl.

Verbindungen der Formel I mit verzweigten oder substituierten Flügelgruppen R können gelegentlich wegen einer besseren Löslichkeit in den üblichen flüssigkristallinen Basismaterialien von Bedeutung sein. Bevorzugt ist die Gruppe R geradkettig.

R kann einen polymerisierbaren Rest darstellen. Der Ausdruck "polymerisierbarer Rest" umfasst insbesondere eine Gruppe der Formel

-(Sp)ᵣ-P,

worin
- Sp: einen sog. Spacer (Abstandsglied) darstellt, d.h. insbesondere ein 1-15-C Alkylen worin eine oder mehrere -CH₂- durch -O-, -CO-, -O(CO)- oder -(CO)O- ersetzt sein können, so dass nicht zwei Sauerstoffatome benachbart sind,
- r: 0 oder 1, bevorzugt 0, und
- P: eine polymerisierbare Gruppe, vorzugsweise Acryl, Methacryl, Fluoracryl, Chloracryl, Oxetanyl, Epoxy, Vinyl, Vinyloxy, Propenyloxy oder Styroyl, insbesondere Acryl oder Methacryl,
bedeuten.

Die polymerisierbare Gruppe P ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C≡C-Dreifachbindung, sowie zur Polymerisation unter Ringöffnung geeignete Gruppen wie beispielsweise Oxetan- oder Epoxygruppen

Der Begriff "Abstandsgruppe" (engl. "spacer" oder "spacer group"), vor- und nachstehend auch als "Sp" bezeichnet, ist dem Fachmann bekannt und in der Literatur beschrieben, siehe beispielsweise Pure Appl. Chem. 73(5), 888 (2001) und C. Tschierske, G. Pelzl, S. Diele, Angew. Chem. 2004, 116, 6340-6368. Falls nicht anders angegeben, bezeichnet der Begriff "Abstandsgruppe" bzw. "Spacer" vor- und nachstehend eine flexible Gruppe, die in einer polymerisierbaren mesogenen Verbindung die mesogene Gruppe und die polymerisierbare Gruppe P miteinander verbindet.

Verbindungen der Formel I, die über für Polymerisationsreaktionen geeignete Flügelgruppen R verfügen, eignen sich zur Darstellung von polymerisierbaren flüssigkristallinen Mischungen und von resultierenden flüssigkristallinen Polymeren und von polymerstabilisierten flüssigkristallinen Medien.

Eine interessante Anwendung polymerisierbarer Verbindungen stellen die sogenannten PS-Anzeigen (polymer stabilized) dar, die auch unter dem Begriff "PSA" (polymer sustained alignment) bekannt sind. Darin wird dem flüssigkristallinen Medium eine geringe Menge (zum Beispiel 0.3 Gew.%, typischerweise <1 Gew.%) einer polymerisierbaren Verbindung zugesetzt, welche nach Einfüllen in die Flüssigkristallzelle in der gewünschten flüssigkristallinen Ausrichtung (z.B. durch angelegte elektrische Spannung zwischen den Elektroden) in situ polymerisiert bzw. vernetzt wird. Die Polymerisation erfolgt üblicherweise durch UV-Photopolymerisation. Als besonders geeignet hat sich der Zusatz von polymerisierbaren mesogenen oder flüssigkristallinen Verbindungen, auch als reaktive Mesogene oder "RM"s bezeichnet, zur flüssigkristallinen Mischung erwiesen.

Ein weiterer Gegenstand der Erfindung ist daher die Verwendung von polymerisierbaren Verbindungen der Formel I für die Polymerstabilisierung eines flüssigkristallines Mediums, sowie ein flüssigkristallines Medium enthaltend eine oder mehrere polymerisierbare Verbindungen der Formel I und eine oder mehrere zusätzliche Verbindungen, welche auch mesogen, flüssigkristallin und/oder polymerisierbar sein können.

Bevorzugt sind Verbindungen der Formeln I, worin L³ ein Fluor bedeutet.

Bevorzugt sind Verbindungen der Formeln I, worin m 0 ist.

Besonders bevorzugte Verbindungen der Formel I sind die Verbindungen der Formeln I1 bis I3, 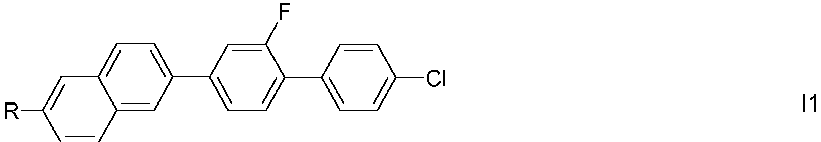 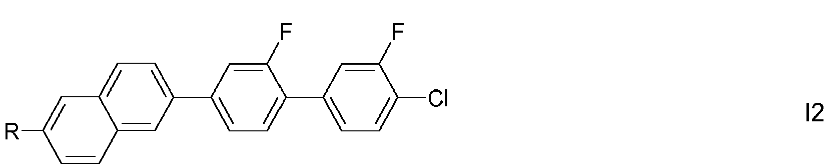 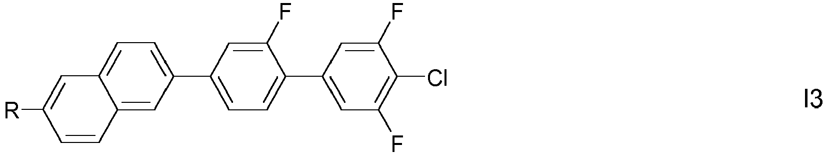 worin R unabhängig die oben angegebenen Bedeutungen, insbesondere die bevorzugten Bedeutungen oder Kombinationen davon, hat. Unter den Verbindungen der Formeln I1 bis I3 sind die Formeln I1 und I2 bevorzugt.

Die Verbindungen der Formel I werden nach an sich bekannten Methoden dargestellt, wie sie in der Literatur (z.B. in den Standardwerken wie

Houben-Weyl, Methoden der Organischen Chemie, Georg-Thieme-Verlag, Stuttgart) beschrieben sind und zwar unter Reaktionsbedingungen, die für die genannten Umsetzungen bekannt und geeignet sind. Dabei kann man auch von an sich bekannten, hier nicht näher erwähnten Varianten Gebrauch machen.

Verbindungen der Formel I können vorteilhafterweise wie an der folgenden beispielhaften Synthese und den Beispielen ersichtlich hergestellt werden (Schema 1):

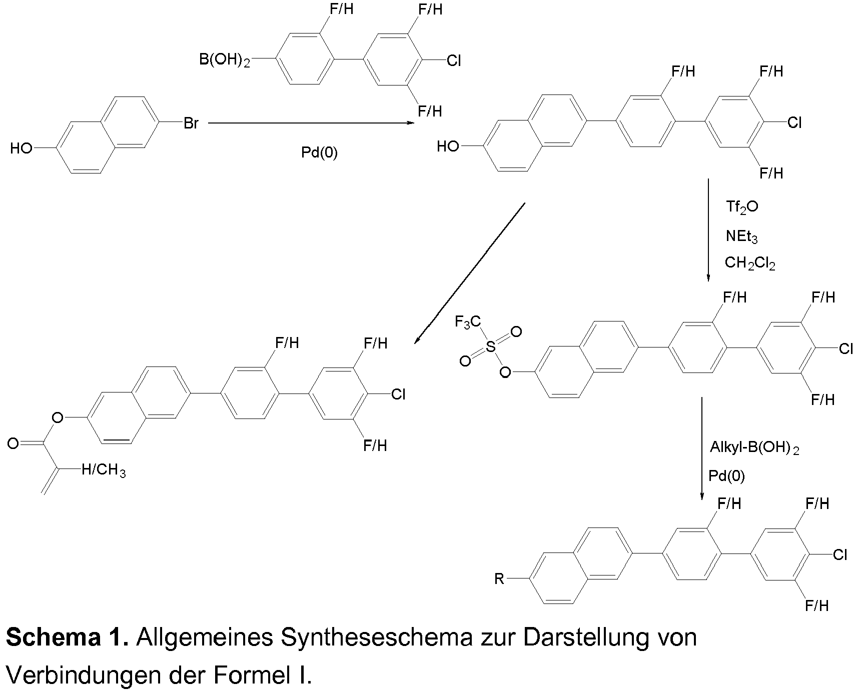

Entsprechende Ausgangsprodukte lassen sich in der Regel vom Fachmann ohne weiteres über literaturbekannte Synthesemethoden herstellen. Die Synthese der Biphenyl-Boronsäurederivate erfolgt beispielsweise durch Metallierung von entsprechenden Halogenverbindungen und anschließender Reaktion mit geeigneten einfachen Borverbindungen, wie z. B. Borsäuretrialkylestern. Nach Hydrolyse werden die Boronsäuren für die Suzuki-Kupplung mit Halogen-Naphthalinen erhalten.

Anstelle der Naphthalin-Bromide können auch lodide, Chloride oder Abgangsgruppen mit vergleichbarer Reaktivität für die Suzuki-Kupplung verwendet werden (z. B. die Triflat-Gruppe).

Die Erfindung hat daher auch ein Verfahren zur Herstellung von Verbindungen der Formel I zum Gegenstand das einen Verfahrensschritt umfasst, in dem eine Boronsäure der Formel IIA oder ein offenkettiger oder cyclischer Boronsäureester der Formel IIB 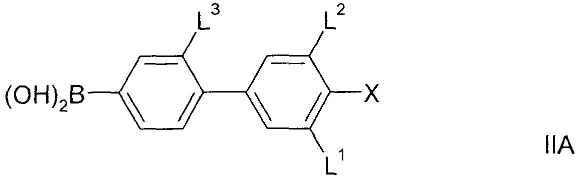 oder 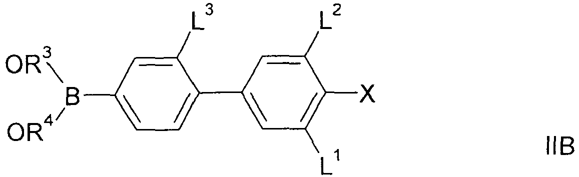
worin X, L¹, L² und L³ wie für Formel I definiert sind, und
R³, R⁴ ein Alkyl mit 1-12 C-Atomen oder R³+R⁴ zusammen auch ein 2-10 C Alkylen, insbesondere der Formeln -CH₂-(CH₂)ₚ-CH₂- und -C(CH₃)₂C(CH₃)₂-,
   oder 1,2-Phenylen bedeuten,
   wobei Phenylen, R³, R⁴ und R³+R⁴ auch substituiert sein können und wobei p 0 oder 1 ist,
mit einer Verbindung der Formel III 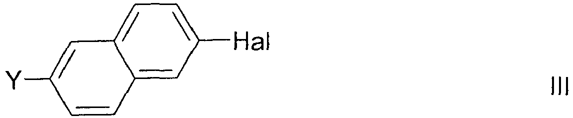 worin
Y eine Gruppe R-(A-Z)ₘ- oder OH,
worin R, A, Z und m unabhängig wie für Formel I definiert sind und Hal Cl, Br, I oder O(SO₂)CF₃ bedeutet,

in Gegenwart eines Übergangsmetallkatalysators zur Reaktion gebracht wird. Dabei entsteht eine Verbindung der Formel I oder eine Vorstufe davon.

Der Übergangsmetallkatalysator ist bevorzugt ein Palladiumkomplex der Oxidationsstufen 0, II oder IV. Die Reaktion erfolgt bevorzugt in homogener Phase mit einem löslichen Katalysator. Katalysatoren zur Durchführung einer Suzuki-Kupplung an den Produkten der Formel (I) sind allgemein bekannt. Die bevorzugt einzusetzenden Katalysatoren können aus gängigen Palladium(II)-Salzen wie etwa Palladiumchlorid, -bromid, - iodid, -acetat, -acetylacetonat, die wahlweise durch weitere Liganden wie z. B. Alkylnitrile stabilisiert sein können, bzw. aus Pd (0)-Spezies wie Palladium auf Aktivkohle oder Tris(dibenzylidenaceton)dipalladium zusammen mit Phosphinliganden in situ erzeugt werden.

Bei den eingesetzten Komplexen handelt es sich besonders bevorzugt um Bis(triphenylphosphin)palladium(II)chlorid. Die verwendeten Reaktionsmethoden und Reagenzien werden in einschlägigen Publikationen eingehend beschrieben.

Vorzugsweise wird eine Katalysatormenge von 0,01 mol% bis 20 mol%, bezogen auf das aromatische oder heteroaromatische Edukt der Formel (II), eingesetzt.

Das Verfahren wird vorzugsweise in Gegenwart einer Base durchgeführt. Die eingesetzte Base bei der Suzuki-Kupplung ist vorzugsweise ausgewählt aus Basen wie Natriumhydroxid, Natriummethanolat, Natriumacetat, Kaliumfluorid, Kaliumphosphat oder Kaliumcarbonat. Weitere Reaktionsbedingungen können den Ausführungsbeispielen entnommen werden.

Eine Alternative zu dem dargestellten Verfahren besteht darin, dass die reaktiven Gruppen der Reaktionspartner (Boronsäure und Halogenid) ausgetauscht werden.

Bevorzugt ist ein Verfahren, worin Y OH ist, und das Zwischenprodukt aus Verbindungen der Formel III und IIA bzw. IIB zu einer Verbindung der Formel I umgesetzt wird in einem oder mehreren weiteren Reaktionsschritten (vgl. Schema 1).

Weitere, vorangehend nicht genannte, bevorzugte Verfahrensvarianten lassen sich den Beispielen oder den Ansprüchen entnehmen.

Gegenstand der Erfindung sind auch flüssigkristalline Medien enthaltend eine oder mehrere der erfindungsgemäßen Verbindungen der Formel I. Die flüssigkristallinen Medien enthalten wenigstens zwei Komponenten. Man erhält sie vorzugsweise indem man die Komponenten miteinander vermischt. Ein erfindungsgemäßes Verfahren zur Herstellung eines flüssigkristallinen Mediums ist daher dadurch gekennzeichnet, dass man mindestens eine Verbindung der Formel I mit mindestens einer weiteren mesogenen Verbindung vermischt und gegebenenfalls Additive zugibt.

Die erzielbaren Kombinationen aus Klärpunkt, Viskosität bei tiefer Temperatur, thermischer und UV-Stabilität und dielektrischer Anisotropie übertreffen bei weitem bisherige Materialien aus dem Stand der Technik.

Die erfindungsgemäßen, flüssigkristallinen Medien enthalten vorzugsweise neben einer oder mehreren erfindungsgemäßen Verbindungen als weitere Bestandteile 2 bis 40, besonders bevorzugt 4 bis 30 Komponenten. Insbesondere enthalten diese Medien neben einer oder mehreren erfindungsgemäßen Verbindungen 7 bis 25 Komponenten. Diese weiteren Bestandteile werden vorzugsweise ausgewählt aus nematischen oder nematogenen (monotropen oder isotropen) Substanzen, insbesondere Substanzen aus den Klassen der Azoxybenzole, Benzylidenaniline, Biphenyle, Terphenyle, Phenyl- oder Cyclohexylbenzoate, Cyclohexancarbonsäure-phenyl- oder cyclohexylester, Phenyl- oder Cyclohexylester der Cyclohexylbenzoesäure, Phenyl- oder Cyclohexylester der Cyclohexylcyclohexancarbonsäure, Cyclohexylphenylester der Benzoesäure, der Cyclohexancarbonsäure bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexylcyclohexane, 1,4-Bis-cyclohexylbenzole, 4,4'-Bis-cyclohexylbiphenyle, Phenyl- oder Cyclohexylpyrimidine, Phenyl- oder Cyclohexylpyridine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, 1-Cyclohexyl-2-(4-phenyl-cyclohexyl)-ethane, 1-Cyclohexyl-2-biphenylethane, 1-Phenyl-2-cyclohexyl-phenylethane, gegebenenfalls halogenierten Stilbene, Benzylphenylether, Tolane und substituierten Zimtsäuren. Die 1,4-Phenylengruppen in diesen Verbindungen können auch fluoriert sein.

Die wichtigsten als weitere Bestandteile der erfindungsgemäßen Medien in Frage kommenden Verbindungen lassen sich durch die Formeln 1, 2, 3, 4 und 5 charakterisieren:

| | |
|---|---|
| R'-L-E-R" | 1 |
| R'-L-COO-E-R" | 2 |
| R'-L-CF₂O-E-R" | 3 |
| R'-L-CH₂CH₂-E-R" | 4 |
| R'-L-C≡C-E-R" | 5 |

In den Formeln 1, 2, 3, 4 und 5 bedeuten L und E, die gleich oder verschieden sein können, jeweils unabhängig voneinander einen bivalenten Rest aus der aus den Strukturelementen -Phe-, -Cyc-, -Phe-Phe-, -Phe-Cyc-, -Cyc-Cyc-, -Pyr-, -Dio-, -Py-, -G-Phe-, -G-Cyc- und deren Spiegelbildern gebildeten Gruppe, wobei Phe unsubstituiertes oder durch Fluor substituiertes 1,4-Phenylen, Cyc trans-1,4-Cyclohexylen, Pyr Pyrimidin-2,5-diyl oder Pyridin-2,5-diyl, Dio 1,3-Dioxan-2,5-diyl, Py Tetrahydropyran-2,5-diyl- und G 2-(trans-1,4-Cyclohexyl)-ethyl bedeuten. Vorzugsweise ist einer der Reste L und E Cyc, Phe oder Pyr. E ist vorzugsweise Cyc, Phe oder Phe-Cyc. Vorzugsweise enthalten die erfindungsgemäßen Medien eine oder mehrere Komponenten ausgewählt aus den Verbindungen der Formeln 1, 2, 3, 4 und 5, worin L und E ausgewählt sind aus der Gruppe Cyc, Phe und Pyr und gleichzeitig eine oder mehrere Komponenten ausgewählt aus den Verbindungen der Formeln 1, 2, 3, 4 und 5, worin einer der Reste L und E ausgewählt ist aus der Gruppe Cyc, Phe, Py und Pyr und der andere Rest ausgewählt ist aus der Gruppe -Phe-Phe-, -Phe-Cyc-, -Cyc-Cyc-, -G-Phe- und -G-Cyc-, und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und -G-Cyc-.

R' und/oder R" bedeuten jeweils unabhängig voneinander Alkyl, Alkenyl, Alkoxy, Alkoxyalkyl, Alkenyloxy oder Alkanoyloxy mit bis zu 8 C-Atomen, -F, -Cl, -CN, -NCS oder -(O)ᵢCH₃₋ₖFₖ, wobei i 0 oder 1 und k 1, 2 oder 3 ist.

R' und R" bedeuten in einer kleineren Untergruppe der Verbindungen der Formeln 1, 2, 3, 4 und 5 jeweils unabhängig voneinander Alkyl, Alkenyl, Alkoxy, Alkoxyalkyl, Alkenyloxy oder Alkanoyloxy mit bis zu 8 C-Atomen. Im Folgenden wird diese kleinere Untergruppe Gruppe A genannt und die Verbindungen werden mit den Teilformeln 1a, 2a, 3a, 4a und 5a bezeichnet. Bei den meisten dieser Verbindungen sind R' und R" voneinander verschieden, wobei einer dieser Reste meist Alkyl, Alkenyl, Alkoxy oder Alkoxyalkyl ist.

In einer anderen als Gruppe B bezeichneten kleineren Untergruppe der Verbindungen der Formeln 1, 2, 3, 4 und 5 bedeutet R" -F, -Cl, -NCS oder -(O)ᵢCH₃₋ₖFₖ, wobei i 0 oder 1 und k 1, 2 oder 3 ist. Die Verbindungen, in denen R" diese Bedeutung hat, werden mit den Teilformeln 1b, 2b, 3b, 4b und 5b bezeichnet. Besonders bevorzugt sind solche Verbindungen der Teilformeln 1b, 2b, 3b, 4b und 5b, in denen R" die Bedeutung -F, -Cl, -NCS, -CF₃, -OCHF₂ oder -OCF₃ hat.

In den Verbindungen der Teilformeln 1b, 2b, 3b, 4b und 5b hat R' die bei den Verbindungen der Teilformeln 1a bis 5a angegebenen Bedeutungen und ist vorzugsweise Alkyl, Alkenyl, Alkoxy oder Alkoxyalkyl.

In einer weiteren kleineren Untergruppe der Verbindungen der Formeln 1, 2, 3, 4 und 5 bedeutet R" -CN. Diese Untergruppe wird im Folgenden als Gruppe C bezeichnet und die Verbindungen dieser Untergruppe werden entsprechend mit Teilformeln 1c, 2c, 3c, 4c und 5c beschrieben. In den Verbindungen der Teilformeln 1c, 2c, 3c, 4c und 5c hat R' die bei den Verbindungen der Teilformeln 1a bis 5a angegebenen Bedeutungen und ist vorzugsweise Alkyl, Alkoxy oder Alkenyl.

Neben den bevorzugten Verbindungen der Gruppen A, B und C sind auch andere Verbindungen der Formeln 1, 2, 3, 4 und 5 mit anderen Varianten der vorgesehenen Substituenten gebräuchlich. Alle diese Substanzen sind nach literaturbekannten Methoden oder in Analogie dazu erhältlich.

Die erfindungsgemäßen Medien enthalten neben erfindungsgemäßen Verbindungen der Formel I vorzugsweise eine oder mehrere Verbindungen, welche ausgewählt werden aus den Gruppen A, B und/oder C. Die Massenanteile der Verbindungen aus diesen Gruppen in den erfindungsgemäßen Medien sind vorzugsweise:
- Gruppe A:: 0 bis 90 %, vorzugsweise 20 bis 90 %, besonders bevorzugt 30 bis 90 %;
- Gruppe B:: 0 bis 80 %, vorzugsweise 10 bis 80 %, besonders bevorzugt 10 bis 65 %;
- Gruppe C:: 0 bis 80 %, vorzugsweise 0 bis 80 %, besonders bevorzugt 0 bis 50 %;
wobei die Summe der Massenanteile der in den jeweiligen erfindungsgemäßen Medien enthaltenen Verbindungen aus den Gruppen A, B und/oder C vorzugsweise 5 bis 90 % und besonders bevorzugt 10 bis 90 % beträgt.

Die erfindungsgemäßen Medien enthalten vorzugsweise 1 bis 40 %, besonders bevorzugt 5 bis 30 %, der erfindungsgemäßen Verbindungen.

Die Herstellung der erfindungsgemäßen Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, vorzugsweise bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Weiterhin ist es möglich, die Mischungen auf andere herkömmliche Arten, z. B. durch Verwendung von Vormischungen, z.B. Homologen-Mischungen oder unter Verwendung von sogenannten "Multi-Bottle"-Systemen herzustellen.

Die Dielektrika können auch weitere, dem Fachmann bekannte und in der Literatur beschriebene Zusätze enthalten. Beispielsweise können 0 bis 15 %, vorzugsweise 0 bis 10 %, pleochroitische Farbstoffe, chirale Dotierstoffe, Stabilisatoren oder Nanopartikel zugesetzt werden. Die einzelnen zugesetzten Verbindungen werden in Konzentrationen von 0,01 bis 6 %, vorzugsweise von 0,1 bis 3 %, eingesetzt. Dabei werden jedoch die Konzentrationsangaben der übrigen Bestandteile der Flüssigkristallmischungen also der flüssigkristallinen oder mesogenen Verbindungen, ohne Berücksichtigung der Konzentration dieser Zusatzstoffe angegeben. Die erfindungsgemäßen Flüssigkristallmischungen ermöglichen eine bedeutende Erweiterung des zur Verfügung stehenden Parameterraumes.

Gegenstand der Erfindung sind auch elektrooptische Anzeigen (insbesondere TFT-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Der Ausdruck "Alkyl" umfasst unverzweigte und verzweigte Alkylgruppen mit 1-9 Kohlenstoffatomen, insbesondere die unverzweigten Gruppen Methyl, Ethyl, Propyl, Butyl, Pentyl, Hexyl und Heptyl. Gruppen mit 2-5 Kohlenstoffatomen sind im allgemeinen bevorzugt.

Der Ausdruck "Alkenyl" umfasst unverzweigte und verzweigte Alkenylgruppen mit bis zu 9 Kohlenstoffatomen, insbesondere die unverzweigten Gruppen. Besonders bevorzugte Alkenylgruppen sind C₂₋C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "halogenierter Alkylrest" umfasst vorzugsweise ein- oder mehrfach fluorierte und/oder chlorierte Reste. Perhalogenierte Reste sind eingeschlossen. Besonders bevorzugt sind fluorierte Alkylreste, insbesondere CF₃, CH₂CF₃, CH₂CHF₂, CHF₂, CH₂F, CHFCF₃ und CF₂CHFCF₃. Der Ausdruck "halogenierter Alkenylrest" und verwandte Ausdrücke erklären sich entsprechend.

Die Gesamtmenge an Verbindungen der Formeln I in den erfindungsgemäßen Gemischen ist nicht kritisch. Die Gemische können daher eine oder mehrere weitere Komponenten enthalten zwecks Optimierung verschiedener Eigenschaften.

Der Aufbau der erfindungsgemäßen Matrix-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der Matrix-Anzeige, insbesondere auch Matrix-Anzeigeelemente auf Basis von poly-Si TFT.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die folgenden Beispiele erläutern die Erfindung, ohne sie begrenzen zu sollen. Der Fachmann wird in der Lage sein, den Beispielen Details zur Durchführung zu entnehmen, die in der allgemeinen Beschreibung nicht im Einzelnen aufgeführt sind, sie nach allgemeinen Fachkenntnissen zu verallgemeinern und auf eine spezielle Problemstellung anzuwenden.

Vor- und nachstehend bedeuten Prozentangaben Gewichtsprozent. Alle Temperaturen sind in Grad Celsius angegeben. Ferner bedeuten K = kristalliner Zustand, N = nematische Phase, Sm = smektische Phase und I = isotrope Phase. Die Angaben zwischen diesen Symbolen stellen die Übergangstemperaturen dar. Δn bedeutet optische Anisotropie (589 nm, 20 °C), Δε die dielektrische Anisotropie (1kHz, 20 °C) und γ₁ die Rotationsviskosität (20°C; in der Einheit mPa·s).

Die Bestimmung physikalischer, physikochemischer beziehungsweise elektrooptischer Parameter erfolgt nach allgemein bekannten Verfahren, wie sie unter anderem beschrieben sind in der Broschüre "Merck Liquid Crystals - Licristal® - Physical Properties of Liquid Crystals - Description of the Measurements Methods", 1998, Merck KGaA, Darmstadt.
Die dielektrische Anisotropie Δε der einzelnen Substanzen wird bei 20 °C und 1 kHz bestimmt. Dazu werden 5-10 Gew.% der zu untersuchenden Substanz in der dielektrisch positiven Mischung ZLI-4792 (Merck KGaA) gelöst gemessen und der Messwert auf eine Konzentration von 100 % extrapoliert. Die optische Anisotropie Δn wird bei 20°C und einer Wellenlänge von 589,3 nm bestimmt, die Rotationsviskosität γ₁ bei 20°C, beide ebenfalls durch lineare Extrapolation.

In der vorliegenden Anmeldung, bedeutet, wenn nicht ausdrücklich anders angegeben, die Pluralform eines Begriffs sowohl die Singularform als auch die Pluralform, und umgekehrt. Weitere Kombinationen der Ausführungsformen und Varianten der Erfindung gemäß der Beschreibung ergeben sich auch aus den angefügten Ansprüchen.

Folgende Abkürzungen werden verwendet:
- MTB: Methyl-*tert*-butylether
- DCM: Dichlormethan

### 1.1 Synthese von 2-Hydroxy-6-(2-fluor-4'-chlor-1,1'-biphenyl)naphthalin

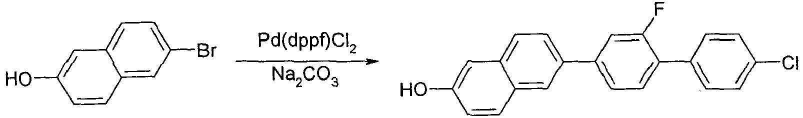

70 g (314 mmol) 2-Brom-6-naphthol und 92,3 g (369 mmol) 4'-Chloro-2-fluor-1,1'-biphenyl-4-boronsäure werden in einem Gemisch aus 600 ml 1,4-Dioxan und 300 ml Wasser vorgelegt, mit 65 g (613 mmol) Natriumcarbonat und 6,7 g (9 mmol) Dichlor[1,1'-bis(diphenylphosphino)-ferrocen]palladium(II) versetzt und 16 h refluxiert.

Der Ansatz wird abgekühlt, mit MTB, Wasser und 1 M wässriger Salzsäure versetzt und die Phasen getrennt. Die wässrige Phase wird zweimal mit MTB extrahiert, die vereinigten organischen Phasen mit gesättigter Natriumchloridlsg. gewaschen, über Natriumsulfat getrocknet, abfiltriert und am Rotationsverdampfer eingeengt. Der Rückstand wird säulenchromatographisch (SiO₂, DCM) gereinigt und anschließend heiß aus Isopropanol ausgerührt; das Produkt wird als sandfarbener Feststoff erhalten.

### 1.2 Synthese von 2-Trifluormethansulfonyl-6-(2-fluor-4'-chlor-1,1'-biphenyl)-naphthalin

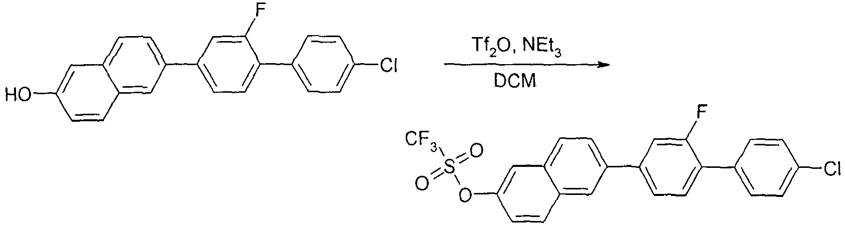

50 g (140 mmol) des in der vorhergehenden Reaktion erhaltenen aromatischen Alkohols werden in 450 ml DCM und 27 ml (195 mmol) Triethylamin vorgelegt, mit 340 mg (2,8 mmol) 4-(Dimethylamino)-pyridin und sodann tropfenweise bei 0 °C mit 47 g (168 mmol) Trifluormethansulfonsäureanhydrid versetzt. Nach 16 h wird durch die Zugabe von Wasser aufgearbeitet. Die Phasen werden getrennt und die organische Phase über Natriumsulfat getrocknet, abfiltriert und am Rotationsverdampfer eingeengt. Der Rückstand wird säulenchromatographisch (SiO₂, Heptan → Heptan/DCM = 1:1) gereinigt; das Produkt wird als gelber Feststoff erhalten.

### 1.3 Synthese von 2-Butyl-6-(2-fluor-4'-chlor-1,1'-biphenyl)-naphthalin

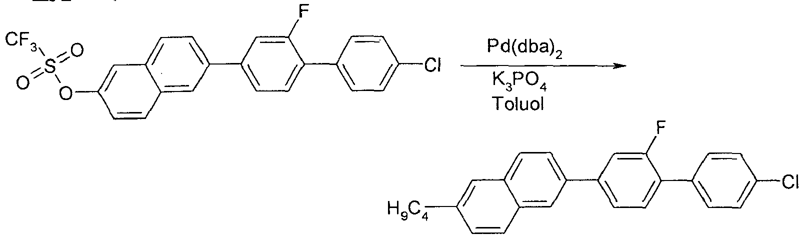

13,9 g (60 mmol) Kaliumphosphat werden in 100 ml Toluol vorgelegt und mit 4,4 g (42 mmol) Butylboronsäure, 345 mg (0,6 mmol) Bis(dibenzylideneaceton)palladium(0) und 254 mg (0,6 mmol) 2-Dicyclohexylphosphino-2',6'-dimethoxybiphenyl versetzt. Anschließend werden 15 g (31 mmol) des in der vorhergehenden Reaktion erhaltenen Triflats zugesetzt und 18h refluxiert. Die Aufarbeitung erfolgt durch Zugabe von MTB und Wasser, die Phasen werden getrennt und die wässrige Phase wird zweimal mit MTB extrahiert. Die vereinigten organischen Phasen werden mit gesättigter Natriumchloridlösung gewaschen, über Natriumsulfat getrocknet, abfiltriert und am Rotationsverdampfer eingeengt. Der Rückstand wird säulenchromatographisch (SiO₂, Heptan/Toluol = 9:1) gereinigt; die weitere Aufreinigung erfolgt durch Umkristallisation aus Isopropanol-Toluol und aus Heptan-Toluol-Gemischen. Das gewünschte Produkt wird als farbloser kristalliner Feststoff erhalten.
**MS (EI):** m/z (%) = 388 (100, M⁺), 345 (94, [M - Propyl]⁺).
K 113 SmA 200 N 248 I
Δε = 11.8
Δn = 0,338
γ₁ = 1785 mPa·s
Analog oder vergleichbar wurden synthetisiert:

### 2. 2-Butyl-6-(2-fluor-3'-fluor-4'-chlor-1,1'-biphenyl)-naphthalin

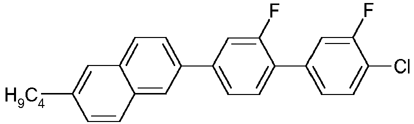

**MS (EI):** m/z (%) = 406 (84, M⁺), 363 (100, [M - Propyl]⁺).
Tg -33 K 62 SmA 168 N 208 I
Δε = 10,5
Δn = 0,322
γ₁ = 1392 mPa·s

### 3. 2-Propoxy-6-(2-fluor-3'-fluor-4'-chlor-1,1'-biphenyl)-naphthalin

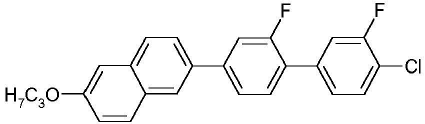

**MS (EI):** m/z (%) = 408 (56, M⁺), 366 (100, [M - C₃H₆]⁺).
K 112 SmA 193 N 246 I
Δε = +9,9
Δn = 0,35
γ₁ = 3156 mPa·s

### 4. Synthese von 2-(Methacroyl)-oxo-6-(2-fluor-4'-chlor-1,1'-biphenyl)-naphthalin

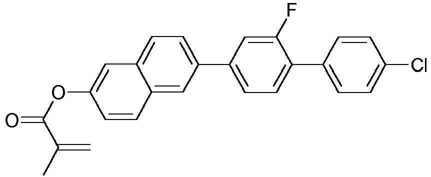

9,5 g (27 mmol) 2-Hydroxy-6-(2-fluor-4'-chlor-1,1'-biphenyl)naphthalin, 3,3 g (38 mmol) Methacrylsäure und 33 mg (2,7 mmol) 4-(Dimethylamino)-pyridin werden in 100 ml Dichlormethan vorgelegt, auf 0 °C gekühlt und sodann mit 6,1 g (39 mmol) 1-Ethyl-3-[3-dimethylaminopropyl]carbodiimide in 20 ml Dichlormethan versetzt. Es wird 18 h gerührt, dabei auf Raumtemperatur erwärmt und anschließend durch direkte Filtration (SiO₂, Heptan/Dichlormethan = 1:1) aufgearbeitet. Die weitere Aufreinigung erfolgt durch Umkristallisation aus Acetonitril-Toluol und aus Essigester-Tetrahydrofuran-Gemischen. Das gewünschte Produkt wird als farbloser kristalliner Feststoff erhalten.
**MS (EI):** m/z (%) = 416 (52, M⁺), 69 (100, [CH₃C(=CH₂)C=O]⁺).
K 144 SmA 203 N decomp.

Weitere Kombinationen der Ausführungsformen und Varianten der Erfindung gemäß der Beschreibung ergeben sich auch aus den folgenden Ansprüchen.

## Patentansprüche

1. Verbindungen der Formel I, 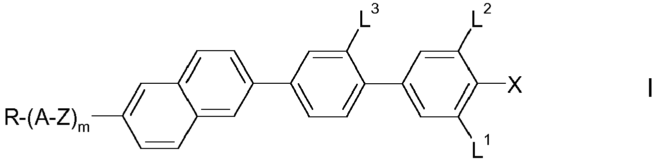 worin
X Cl,
R einen halogenierten oder unsubstituierten Alkylrest mit 1 bis 15 C-Atomen, wobei in diesen Resten auch eine oder mehrere CH₂-Gruppen jeweils unabhängig voneinander durch -C≡C-, -CH=CH- , -(CO)O-, -O(CO)-, -(CO)- oder -O- so ersetzt sein können, dass O-Atome nicht direkt miteinander verknüpft sind, oder einen polymerisierbaren Rest,
A
a) trans-1,4-Cyclohexylen oder Cyclohexenylen, worin auch eine oder mehrere nicht benachbarte CH₂-Gruppen durch -O- und/oder -S- ersetzt sein können und worin H durch F substituiert sein kann,
b) 1,4-Phenylen, worin eine oder zwei CH-Gruppen durch N ersetzt sein können und worin auch ein oder mehrere H-Atome gegen Br, Cl, F, CN, Methyl, Methoxy oder eine ein- oder mehrfach fluorierte Methyl- oder Methoxygruppe ersetzt sein können,
Z eine Einfachbindung, -CH₂O-, -(CO)O-, -CF₂O-, -CH₂CH₂CF₂O-, -CF₂CF₂-, -CH₂CF₂-, -CH₂CH₂-, -(CH₂)₄-, -CH=CH-, -CH=CF-, -CF=CF- oder -C≡C-, wobei asymmetrische Brücken nach beiden Seiten orientiert sein können,
L¹, L² und L³ unabhängig voneinander H oder F,
m 0 oder 1,
bedeuten.

2. Verbindungen nach Anspruch 1, **dadurch gekennzeichnet, dass** L³ F
bedeutet.

3. Verbindungen nach Anspruch 1 oder 2, **dadurch gekennzeichnet, dass**
R Alkyl, Alkoxy, Alkenyl oder Alkenyloxy mit bis zu 8 Kohlenstoffatomen oder eine polymerisierbare Gruppe
bedeutet.

4. Verbindungen nach einem oder mehreren der Ansprüche 1 bis 3, **dadurch gekennzeichnet, dass** L¹ Fluor und L² H bedeutet.

5. Verbindungen nach einem oder mehreren der Ansprüche 1 bis 4, **dadurch gekennzeichnet, dass** L¹ und L² H bedeuten.

6. Verbindungen nach einem oder mehreren der Ansprüche 1 bis 5 ausgewählt aus den folgenden Formeln, 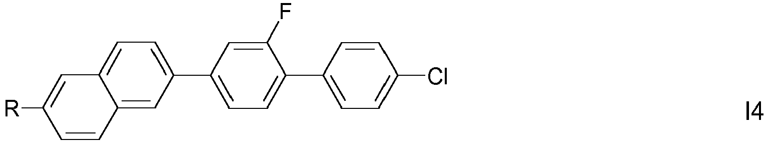 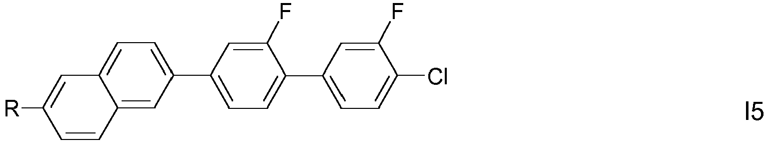 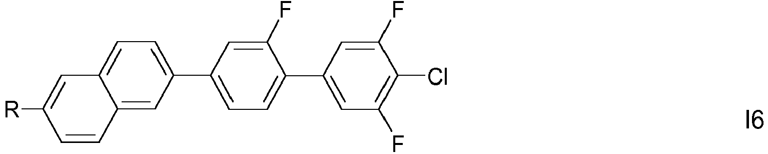 worin R die in Anspruch 1 oder 3 angegebenen Bedeutungen hat.

7. Verfahren zur Herstellung von Verbindungen der Formel I nach einem oder mehreren der Ansprüche 1 bis 6 umfassend einen Verfahrensschritt, in dem eine Boronsäure der Formel IIA oder ein offenkettiger oder cyclischer Boronsäureester der Formel IIB 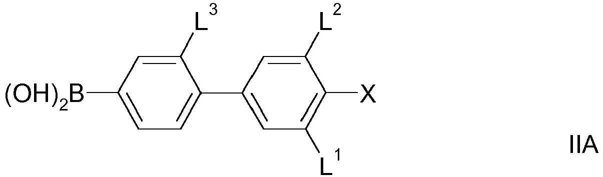 oder 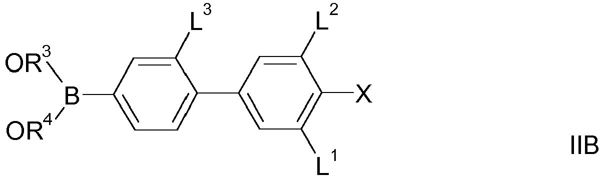 worin X, L¹, L² und L³ wie in Anspruch 1 definiert sind, und
R³, R⁴ ein Alkyl mit 1-12 C-Atomen oder R³+R⁴ zusammen auch ein Alkylen, oder 1,2-Phenylen bedeuten,
wobei Phenylen, R³, R⁴ und R³+R⁴ auch substituiert sein können,
mit einer Verbindung der Formel III 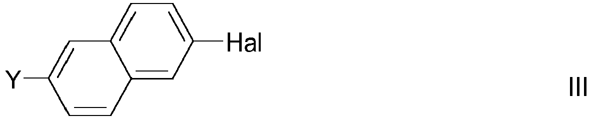 worin
Y eine Gruppe R-(A-Z)ₘ- oder OH,
worin R, A, Z und m unabhängig wie für Formel I definiert sind und
Hal O(SO₂)CF₃, Cl, Br oder I bedeutet,
in Gegenwart eines Übergangsmetallkatalysators zur Reaktion gebracht wird.

8. Verwendung einer oder mehrerer Verbindungen der Formel I nach einem oder mehreren der Ansprüche 1 bis 6 als Komponenten in einem flüssigkristallinen Medium.

9. Flüssigkristallines Medium enthaltend mindestens zwei mesogene Verbindungen, **dadurch gekennzeichnet, dass** es mindestens eine Verbindung der Formel I nach einem oder mehreren der Ansprüche 1 bis 6 enthält.

10. Verwendung des flüssigkristallinen Mediums nach Anspruch 9 für elektrooptische Zwecke.

11. Elektrooptische Flüssigkristallanzeige enthaltend ein flüssigkristallines Medium nach Anspruch 9.

## Claims

1. Compounds of the formula I, 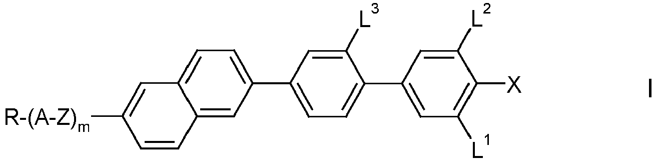 in which
X denotes Cl,
R denotes a halogenated or unsubstituted alkyl radical having 1 to 15 C atoms, where, in addition, one or more CH₂ groups in these radicals may in each case be replaced, independently of one another, by -C≡C-, -CH=CH-, -(CO)O-, -O(CO)-, -(CO)- or -O- in such a way that O atoms are not linked directly to one another, or a polymerisable radical,
A denotes
a) trans-1,4-cyclohexylene or cyclohexenylene, in which, in addition, one or more non-adjacent CH₂ groups may be replaced by -O- and/or -S- and in which H may be substituted by F,
b) 1,4-phenylene, in which one or two CH groups may be replaced by N and in which, in addition, one or more H atoms may be replaced by Br, Cl, F, CN, methyl, methoxy or a mono- or polyfluorinated methyl or methoxy group,
Z denotes a single bond, -CH₂O-, -(CO)O-, -CF₂O-, -CH₂CH₂CF₂O-, -CF₂CF₂-, -CH₂CF₂-, -CH₂CH₂-, -(CH₂)₄-, -CH=CH-, -CH=CF-, -CF=CF- or -C≡C-, where asymmetrical bridges may be oriented to both sides,
L¹, L² and L³, independently of one another, denote H or F, and
m denotes 0 or 1.

2. Compounds according to Claim 1, **characterised in that** L³ denotes F.

3. Compounds according to Claim 1 or 2, **characterised in that**
R denotes alkyl, alkoxy, alkenyl or alkenyloxy having up to 8 carbon atoms or a polymerisable group.

4. Compounds according to one or more of Claims 1 to 3, **characterised in that** L¹ denotes fluorine and L² denotes H.

5. Compounds according to one or more of Claims 1 to 4, **characterised in that** L¹ and L² denote H.

6. Compounds according to one or more of Claims 1 to 5 selected from the formulae: 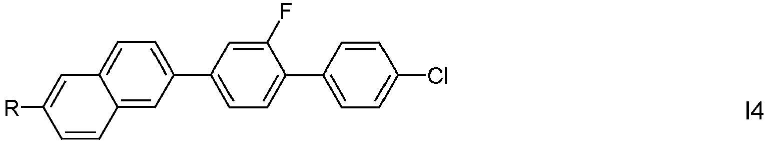 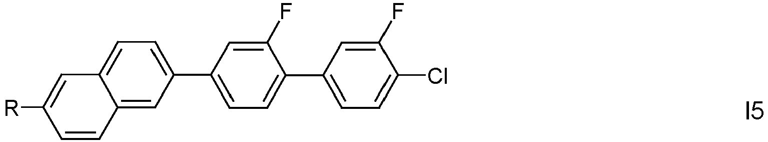 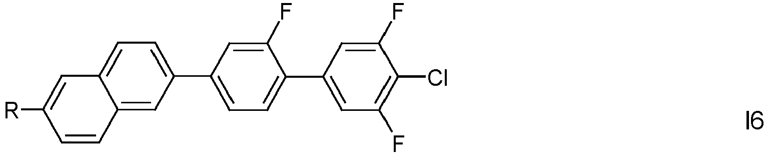 in which R has the meanings indicated in Claim 1 or 3.

7. Process for the preparation of compounds of the formula I according to one or more of Claims 1 to 6, comprising a process step in which a boronic acid of the formula IIA or an open-chain or cyclic boronic acid ester of the formula IIB 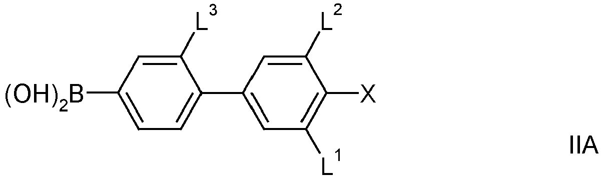 or 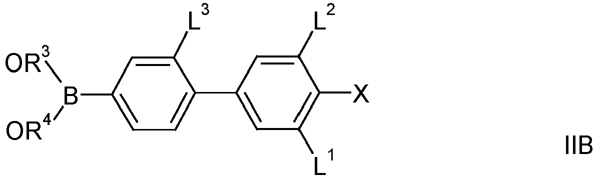 in which X, L¹, L² and L³ are defined as in Claim 1, and
R³, R⁴ denote alkyl having 1-12 C atoms or R³+R⁴ together also denote alkylene or 1,2-phenylene, where phenylene, R³, R⁴ and R³+R⁴ may also be substituted,
is reacted with a compound of the formula III 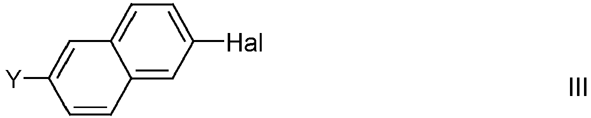 in which
Y denotes a group R-(A-Z)ₘ- or OH,
in which R, A, Z and m independently are defined as for formula I and
Hal denotes O(SO₂)CF₃, Cl, Br or I,
in the presence of a transition-metal catalyst.

8. Use of one or more compounds of the formula I according to one or more of Claims 1 to 6 as components in a liquid-crystalline medium.

9. Liquid-crystalline medium comprising at least two mesogenic compounds, **characterised in that** it comprises at least one compound of the formula I according to one or more of Claims 1 to 6.

10. Use of the liquid-crystalline medium according to Claim 9 for electro-optical purposes.

11. Electro-optical liquid-crystal display containing a liquid-crystalline medium according to Claim 9.

## Revendications

1. Composés de la formule I, 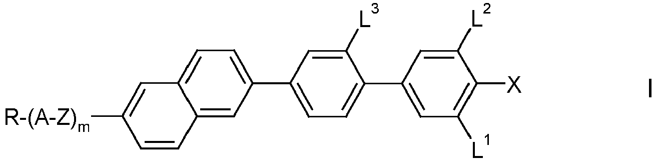 dans laquelle
X représente Cl,
R représente un radical alkyle halogéné ou non substitué qui comporte de 1 à 15 atome(s) de C, où, en outre, un ou plusieurs groupe(s) CH₂ dans ces radicaux peut/peuvent dans chaque cas être remplacé(s), de manière indépendante les uns des autres, par -C≡C-, -CH=CH-, -(CO)O-, -O(CO)-, -(CO)- ou -O- de telle sorte que des atomes de O ne soient pas liés directement les uns aux autres, ou un radical polymérisable,
A représente
a) trans-1,4-cyclohexylène ou cyclohexénylène, où, en outre, un ou plusieurs groupe(s) CH₂ non adjacents peut/ peuvent être remplacé(s) par -O- et/ou par -S- et où H peut être substitué par F,
b) 1,4-phénylène, où un ou deux groupe(s) CH peut/ peuvent être remplacé(s) par N et où, en outre, un ou plusieurs atome(s) de H peut/peuvent être remplacé(s) par Br, Cl, F, CN, méthyle, méthoxy ou un groupe méthyle ou méthoxy mono- ou polyfluoré,
Z représente une liaison simple, -CH₂O-, -(CO)O-, -CF₂O-, -CH₂CH₂CF₂O-, -CF₂CF₂-, -CH₂CF₂-, -CH₂CH₂-, -(CH₂)₄-, -CH=CH-, -CH=CF-, -CF=CF- ou -C≡C-, où des ponts asymétriques peuvent être orientés sur les deux côtés,
L¹, L² et L³, représentent, de manière indépendante les uns des autres, H ou F, et
m représente 0 ou 1.

2. Composés selon la revendication 1, **caractérisés en ce que** L³ représente F.

3. Composés selon la revendication 1 ou 2, **caractérisés en ce que**
R représente alkyle, alcoxy, alkényle ou alkényloxy qui comporte jusqu'à 8 atomes de carbone ou un groupe polymérisable.

4. Composés selon une ou plusieurs des revendications 1 à 3, **caractérisés en ce que** L¹ représente fluor et L² représente H.

5. Composés selon une ou plusieurs des revendications 1 à 4, **caractérisés en ce que** L¹ et L² représentent H.

6. Composés selon une ou plusieurs des revendications 1 à 5 sélectionnés parmi les formules : 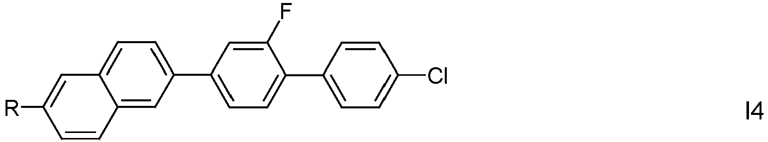 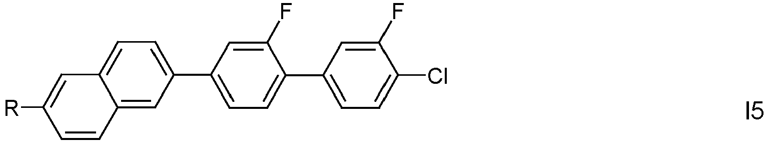 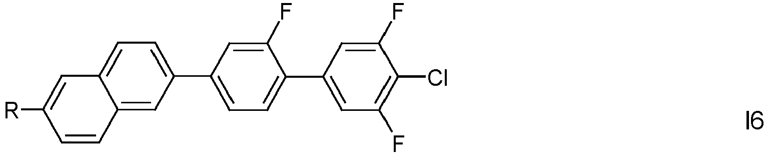 dans lesquelles R présente les significations qui ont été indiquées selon la revendication 1 ou 3.

7. Procédé pour la préparation de composés de la formule I selon une ou plusieurs des revendications 1 à 6, comprenant une étape de procédé selon laquelle un acide boronique de la formule IIA ou un ester d'acide boronique à chaîne ouverte ou cyclique de la formule IIB 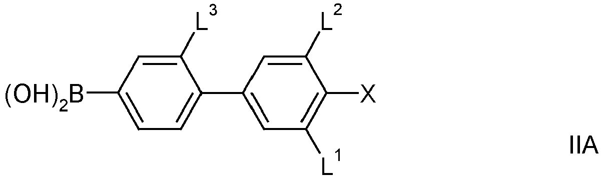 ou 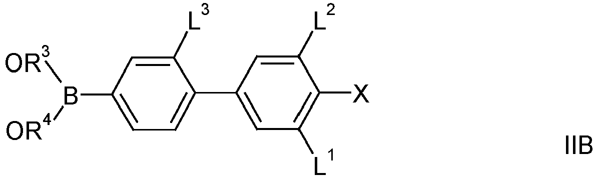
dans lesquelles X, L¹, L² et L³ sont comme il a été défini selon la revendication 1, et
R³, R⁴ représentent alkyle qui comporte de 1 à 12 atome(s) de C ou R³ + R⁴ en association représentent également alkylène ou 1,2-phénylène,
où phénylène, R³, R⁴ et R³ + R⁴ peuvent également être substitués,
est amené à réagir avec un composé de la formule III 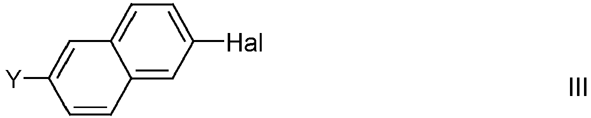 dans laquelle
Y représente un groupe R-(A-Z)ₘ- ou OH,
où R, A, Z et m sont, de manière indépendante, définis comme pour la formule I et
Hal représente O(SO₂)CF₃, Cl, Br ou I,
en présence d'un catalyseur à base de métal de transition.

8. Utilisation d'un ou de plusieurs composé(s) de la formule I selon une ou plusieurs des revendications 1 à 6 en tant que composants dans un milieu cristallin liquide.

9. Milieu cristallin liquide comprenant au moins deux composés mésogènes, **caractérisé en ce qu'**il comprend au moins un composé de la formule I selon une ou plusieurs des revendications 1 à 6.

10. Utilisation du milieu cristallin liquide selon la revendication 9 à des fins électro-optiques.

11. Affichage électro-optique à cristaux liquides contenant un milieu cristallin liquide selon la revendication 9.
